# EUROPÄISCHE PATENTANMELDUNG

(11) **EP 1 209 658 A2**
(43) Veröffentlichungstag der Anmeldung: **29.05.2002**
(21) Anmeldenummer: 01250380.1
(22) Anmeldetag: 29.10.2001
(51) Int. Cl.: G10L 15/10

(54) **Verfahren und Vorrichtung zur Behandlung von Sprachinformationen**

(30) Priorität: 03.11.2000 DE 10054583
(71) Anmelder: Digital Design GmbH, 10787 Berlin (DE)
(72) Erfinder: Wallers, Joseph, 10787 Berlin (DE)
(74) Vertreter: Hengelhaupt, Jürgen, Dipl.-Ing.

(57) **Zusammenfassung**

Die Erfindung betrifft ein Verfahren und eine Vorrichtung zur Durchführung des Verfahrens zur Behandlung von Sprachinformationen wie Abspeicherung und/oder Wiedergabe und/oder Übertragung, welches Mittel zur Eingabe und/oder Abspeicherung und/oder akustischen Wiedergabe und/oder zur Übertragung von Sprach- und Dateninformationen zu anderen Vorrichtungen zur dortigen Abspeicherung und/oder Wiedergabe verwendet sowie Mittel zum Suchen nach einem oder mehreren Sprachsegmenten in den abgespeicherten Sprachinformationen benutzt.

Die Aufgabe der Erfindung, ein gattungsgemäßes Verfahren und eine gattungsgemäße Vorrichtung zu entwickeln, mit denen die Nachteile des Standes der Technik vermieden werden, und mit denen ein Aufzeichnen und Suchen/Wiedergeben von Sprachinformationen ohne manuelle Kennzeichnung und Klassifizierung und ohne die Vorgabe eines Wortschatzes gewährleistet werden, wird dadurch gelöst, daß gesprochene Worte und/oder zusammenhängende Sätze (Notizen) als Sprachsignale in einem Speicher digital aufgezeichnet werden, die in einem Teilumfang von mindestens einem Wort zum Suchen erneut gesprochen und in einer Vorrichtung mit den Aufzeichnungen verglichen und bewertet werden, woraus ein Abstandswert zwischen den beiden Sprachmustern ermittelt und die Notiz mit dem geringsten Abstandswert akustisch ausgegeben wird.

## Beschreibung

Die Erfindung betrifft ein Verfahren und eine Vorrichtung zur Behandlung von Sprachinformationen zur Realisierung eines auf Sprache basierenden Gedächtnisses wie Abspeicherung und/oder Wiedergabe und/oder Übertragung, die Mittel zur Eingabe und/oder Abspeicherung und/oder akustischen Wiedergabe und/oder zur Übertragung von Sprach- und Dateninformationen zu anderen Vorrichtungen zur dortigen Abspeicherung und/oder Wiedergabe aufweisen sowie Mittel zum Suchen nach einem oder mehreren Sprachsegmenten in den abgespeicherten Sprachinformationen enthalten.

Es sind bereits Verfahren und Vorrichtungen bekannt, mit denen es möglich ist, Sprachinformationen abzuspeichern, wobei die abgespeicherten Sprachinformationen mit Digital-Kennzeichnungssignalworten versehen werden, um das Auffinden bestimmter Sprachinformationen zur Wiedergabe oder zur Übertragung zu erleichtern.

In der Offenlegungsschrift DE 33 33 958 A1 ist eine Vorrichtung zum Abspeichern von Sprachinformationen beschrieben, die einen steuerbaren Generator enthält, durch welchen mittels Tastatur Digital-Kennungssignalworte erzeugt werden. Diese werden mit oder getrennt von den Sprachinformationen aufgezeichnet und beim späteren Suchen zum Auffinden der gesuchten Information verwendet.

Nachteilig ist es, dass der Benutzer die Sprachinformationen klassifizieren muß, um einen Suchvorgang nach bestimmten Sprachinformationen starten zu können.

In der US 5,602,963 wird ein elektronischer Personal Organizer beschrieben, welcher Sprachnotizen aufzeichnen und wiedergeben kann. Der Organizer weist auch eine Funktion auf, welche es dem Benutzer ermöglicht, nach dem Aufzeichnen einer Sprachnotiz, diese durch Eingabe eines oder mehrerer gesprochener Worte zum späteren Wiederauffinden zu markieren.

Diese Vorgehensweise hat den Nachteil, dass für jede Notiz, sofern eine Klassifikation erwünscht ist, die Klassifikation vom Benutzer explizit nach dem Aufzeichnen der Notiz vorgenommen werden muß. Die Menge der Worte, nach denen gesucht werden kann, muß vorher festgelegt werden. Diese Worte müssen vorher in einer Trainingsphase vorgesprochen werden. Die Verarbeitung der Sprachsignale im Organizer erfolgt durch unterschiedliche Verarbeitungsfunktionen, je nachdem, ob die Sprache aufgezeichnet oder mit vorgezeichnetem Wortschatz verglichen werden soll.

In der US 4,829,576 wird zur Erhöhung der Wahrscheinlichkeit für die richtige Erkennung eines Wortes vorgeschlagen, aus dem vorgegebenen Wortschatz nur diejenigen Worte zum Vergleich heranzuziehen, welche in dem zu durchsuchenden Textteil enthalten sind. Dazu wird in einem gesonderten Schritt eine SEARCH-WORD-LIST gebildet.

In der US 6,041,300 werden ein Verfahren und eine Vorrichtung beschrieben, nach denen zur Verbesserung der Sprachwahl die Sprache in eine Folge von "Lefeme`n" abzubilden ist, die mit zuvor abgespeicherten "Lefeme-Folgen" verglichen werden. Das erkannte Wort wird zur Bestätigung durch den Benutzer aus der in der Datenbank abgespeicherten Folge von "Lefeme`n" synthetisiert und ausgegeben.

Nachteilig ist dabei insbesondere, dass als erster Schritt der Aufbau einer Datenbank notwendig ist.

Aufgabe der Erfindung ist es, ein gattungsgemäßes Verfahren und eine gattungsgemäße Vorrichtung zu entwickeln, mit denen die Nachteile des Standes der Technik vermieden werden, und mit denen eine auf Sprache gestützte Gedächtnishilfe bereitgestellt wird und mit denen ein Aufzeichnen und Suchen/Wiedergeben von Sprachinformationen ohne manuelle Kennzeichnung und Klassifizierung und ohne die Vorgabe eines Wortschatzes gewährleistet werden.

Erfindungsgemäß wird diese Aufgabe durch die Merkmale der Ansprüche 1 und 22 gelöst.

Das Verfahren ist dadurch gekennzeichnet, dass gesprochene Worte und/oder zusammenhängende Sätze als Sprachsignale der Notiz in einem Speicher digital aufgezeichnet werden, wobei eine Analyse der Sprachsignale und ihre direkte Darstellung im Zeit- und/oder Frequenzbereich erfolgen, die in einem Teilumfang von mindestens einem Wort zum Suchen erneut gesprochen und in einer Vorrichtung mit den Aufzeichnungen verglichen und bewertet werden, woraus ein Abstandswert zwischen den beiden Sprachmustern ermittelt und die Notiz mit dem geringsten Abstandswert akustisch ausgegeben wird.

Im Vergleich zu Spracherkennungssystemen hat der Benutzer eine größere Toleranz gegenüber Fehlern beim Klassifizieren. Die Sprecherabhängigkeit ist bei der Suche nicht nachteilig, sondern ein angenehmer Nebeneffekt hinsichtlich der Vertraulichkeit.

Es erfolgt keine explizite Zuordnung der Sprachnotizen zu bestimmten Worten durch den Benutzer, der Wortschatz muß nicht explizit vorgegeben werden. Es wird keine Trainingsphase benötigt.

Die Vorrichtung zur Durchführung des Verfahrens ist dadurch gekennzeichnet, daß ein Telekommunikationsendgerät wie ein Handy/Telefon mit einer Speicherkarte wie FlashROM und/oder eine Datenverarbeitungseinrichtung wie ein PC, ein Server mit einer speziellen Zusatzsoftware ausgestattet verwendet werden.

Die Grundfunktionen des Verfahrens und der Vorrichtung gemäss dieser Erfindung können durch zwei Vorgänge beschrieben werden: Aufzeichnen und Suchen/Wiedergeben.

Beim Aufzeichnen werden Notizen in Form von einzelnen, gesprochenen Stichworten, z.B. Begriffe, Namen, Nummern, oder zusammenhängenden Sätzen aufgezeichnet. Stichworte, an deren sicherem Wiederfinden dem Benutzer besonders gelegen ist, kann er mehrfach innerhalb einer Notiz sprechen. Die Aufzeichnung kann sowohl in der Vorrichtung (Gerät), z.B. auf einer in einem Handy eingebauten Speicherkarte, als auch mittels Sprach/Datenübertragung auf einem entfernten Gerät, z.B. einem Server oder einem PC, erfolgen.

Zum Suchen spricht der Benutzer die gesuchten Stichworte, Namen, usw. vor. In der Vorrichtung (z.B. Handy) oder in dem anderen, entfernten Gerät (Server oder PC) werden die vorgesprochenen Sprachmuster mit den abgespeicherten Sprachinformationen verglichen und hinsichtlich ihrer Ähnlichkeit bewertet bzw. es wird ein Abstandswert zwischen den beiden Sprachmustern ermittelt. Die Notizen mit der größten Ähnlichkeit (geringstem Abstandswert) werden dann akustisch wiedergegeben. Bei mehreren Fundstellen kann die Wiedergabe in der Reihenfolge der Aufzeichnung (z.B. letzte Aufzeichnungen zuerst) oder nach der Ähnlichkeit von gesuchtem Sprachmuster und gespeicherten Sprachinformationen erfolgen. Suchbefehle können ein oder mehrere Stichworte enthalten. Bei mehreren Stichworten kann die Suche nach Notizen, welche eines der Stichworte, mehrere oder alle enthalten, erfolgen.

In einer bevorzugten Ausführung werden die Notizen zuerst wiedergegeben, welche die höchste Anzahl der gesuchten Stichworte enthalten.

In einer bevorzugten Ausführung der Erfindung werden die Sprachsignale komprimiert aufgezeichnet.

In der Praxis sind eine Reihe von Verfahren zur Sprachkompression bekannt, z.B. die Recommendations G.723 oder G.729 der ITU (International Telecommunication Union) oder die Recommendation GSM 06.10 von ETSI. Diese Verfahren arbeiten mehrstufig. Nach einer Vorbehandlung durch Filter folgt eine Unterteilung in Segmente und eine Signalanalyse, z.B. mittels LPC (Linear Predictive Coding). Die dabei bestimmten Segmente (Sprache/Sprachpause, stimmhaft/stimmlos) und die berechneten Parameter (z.B. Energiegehalt, die Autokorrelationskoeffizienten, die LPC Koeffizienten, die LSP Line Spectral Pair Koeffizienten und Parameter weiterer Verarbeitungsstufen) eignen sich auch zum Vergleich von Sprachmustern. Die Zerlegung der Sprache mit diesen Verfahren und das komprimierte Abspeichern reduzieren den benötigten Speicherplatz gegenüber der unkomprimierten Abspeicherung. Gleichzeitig wird der spätere Mustervergleich beschleunigt.

Eine weitere Ausführung der Erfindung speichert neben der komprimierten Sprachinformation auch unkomprimierte Signale.

Zweck dieser Vorgehensweise ist, zu einem späteren Zeitpunkt bessere Algorithmen einsetzen zu können. Die aufgezeichneten Sprachinformationen können über einen längeren Zeitraum (Jahrzehnte) benötigt werden. Bei einer Sprachkompression gehen unweigerlich Detailinformationen verloren. Da sich sowohl die Leistungsfähigkeit der Informationsverarbeitungsgeräte als auch die Qualität der Algorithmen zum Mustervergleich ständig weiterentwickeln dürften, sollen die Originalsignale zur späteren Verwendung aufbewahrt werden. Der zu erwartende weitere kontinuierliche Kapazitätszuwachs (bei gleichzeitigem Preisverfall) der Speichermedien macht diese Option für den Benutzer erschwinglich.

Ebenso ist es erfindungsgemäß möglich, beim Eingeben anzugeben, welcher Teil der Sprachinformationen auch unkomprimiert gespeichert wird. Die unkomprimierten Signale können auch auf einem anderen Speicher, einem Offline-Speicher, abgelegt werden.

Das Verfahren erlaubt es ferner, verdeckt zu suchen. Wenn bei einem Suchvorgang eine Sprachnotiz gefunden wurde, bei welcher der Vergleich der Sprachmuster des Suchbefehls und Sprachmustern der Sprachnotiz eine vorgegebene Schwelle von Ähnlichkeit überschreitet, wird diese wiedergegeben. Während der Wiedergabe wird die Suche im Hintergrund weitergeführt. Der Zeitaufwand zum Suchen wird hierdurch dem Benutzer teilweise verdeckt.

In einer weiteren Ausführung werden auch die Sprachmuster der in den Suchbefehlen enthaltenen Stichworte, die Zeiger auf die gefundenen Sprachnotizen, die berechneten Abstandswerte und die Reaktion des Benutzers gespeichert. In dieser Ausführung wird davon ausgegangen, dass der Benutzer nach der Wiedergabe einer Notiz eine Wertung vornimmt: GUT, FALSCH. Diese Reaktion wird zusammen mit den Zeigern auf die wiedergegebene Notiz abgespeichert. Bei einem neuen Suchbefehl werden die aktuellen Sprachmuster des Suchbefehls mit den Sprachmustern von früherer Suchvorgängen verglichen. Bei Übereinstimmung der Muster bzw. großer Ähnlichkeit, wird die gespeicherte frühere Reaktion des Benutzers geprüft und sofern positiv, die Sprachnotiz, auf welche der Zeiger der Aufzeichnung des früheren Suchbefehls zeigt, ausgegeben. Die anschließende Reaktion des Benutzers wird wieder mit dem Zeiger zur ausgegebenen Sprachnotiz gespeichert. Diese Vorgehensweise hat einige Vorteile:
- sie verkürzt das Suchen,
- die Treffsicherheit erhöht sich kontinuierlich,
- allmähliche Veränderungen in der Aussprache oder der Stimme des Benutzers werden kompensiert
- die gespeicherten Sprachmuster und Wertungen von Entscheidungen können zur Optimierung der Verfahren benutzt werden.

Das Durchsuchen der Originalnotizen ist weiterhin möglich.

Ferner ist es erfindungsgemäß möglich, nach dem indirekten Suchen mittels Zeiger eines vorherigen Suchbefehls, die Sprachmuster des neuen Suchbefehls mit den Sprachmustern der aufgezeigten Notiz zu vergleichen, und das Ergebnis zur Bestimmung des Abstandswertes zu verwenden.

Ebenso ist es erfindungsgemäß möglich, dass die Wertungen feinstufiger erfolgen: z.B. GANZ FALSCH, SEHR-GUT.

Eine GANZ-FALSCH-Wertung unterbindet dann auf jeden Fall eine Wiedergabe der entsprechenden Notiz bei einem späteren Suchvorgang. Eine FALSCH-Wertung stellt die Notiz in der Reihenfolge der gefundenen Kandidaten zurück, z.B. indem dessen Abstandswert durch Multiplikation mit einem Faktor größer eins vergrößert wird. Entsprechend wird eine SEHR-GUT-Bewertung bei einer späteren Suche die gefundene Notiz, sofern deren Abstandswert unter einer vorgegebenen Schwelle liegt, in der Reihenfolge der Ausgabe bevorzugen.

In einer weiteren Ausführung wird auch ein Zeiger auf die Aufzeichnung des früheren Suchbefehls, zusätzlich zum Zeiger auf die Notiz, mit der Wertung des Benutzers zur Aufzeichnung des aktuellen Suchbefehls abgespeichert.

Eine zusätzliche Verfeinerung der Suchfunktion erweitert die Suchfunktionalität: Assoziationen. Das Gerät sucht nach den im Suchbefehl enthalten Stichworten. Findet es die gesuchten Stichworte in einem früheren Suchbefehl oder in einer Notiz, und enthält der frühere Suchbefehl oder die Sprachnotiz weitere Stichworte, fragt das Gerät durch akustische Wiedergabe dieser Stichworte, ob der Suchvorgang um diese Stichworte erweitert werden soll.

In einer weiteren Verfeinerung werden nur solche Stichworte abgefragt, welche bei mehreren gefundenen Suchbefehlen oder Notizen mehrfach vorkommen.

In der bevorzugten Ausführung werden die Sprachmuster mit dem häufigsten Vorkommen zuerst wiedergegeben.

Der Benutzer kann dann die Liste der zu suchenden Sprachmuster um diese Muster erweitern, die Muster ignorieren lassen, oder Sprachnotizen, welche dieses Sprachmuster enthalten, von der Wiedergabe ausschließen. Diese Funktion erlaubt es zum Einen, die Menge der gefundenen Sprachnotizen sukzessive einzugrenzen, zum Anderen, themenverwandte Aufzeichnungen zu finden.

Zur Beschleunigung des Suchens in umfangreicheren Aufzeichnungen kann das Gerät eine Liste mit Stichworten und Zeigern auf Sprachnotizen, in welchen diese Stichworte vorkommen, anlegen. Zu jedem Stichwort können mehrere Zeiger existieren. Bei mehreren Zeigern pro Stichwort, kann die Liste zu jedem Zeiger den Abstandswert zwischen dem Stichwort (Sprachmuster) in der Index-Liste und dem Stichwort (Sprachmuster) in der referenzierten Notiz enthalten. Bei einem Zeiger pro Stichwort entfällt der Abstandswert, da das Sprachmuster in der Notiz und in der Index-Liste identisch sind. Dem Benutzer kann eine Sonderfunktion zur Verfügung gestellt werden, mit welcher er zu jeder Notiz Stichpunkte diktieren kann. Alternativ können automatisch alle Worte welche einzeln gesprochen werden, (mit deutlicher Pause am Wortanfang und -ende) in die Indexliste aufgenommen werden. Die Erstellung dieser Liste erfordert Rechenleistung. Deshalb wird sie bevorzugt erstellt, wenn das Gerät an eine externe Stromversorgung angeschlossen ist, z.B. während dem Laden des Akkus oder in einem anderen Gerät (Server).

Darüber hinaus können zusammen mit den Sprachinformationen andere Daten gespeichert werden.

Ein Beispiel hierfür sind Bilddaten von einer im Gerät integrierten digitalen Kamera, welche zusammen mit Sprachnotizen gespeichert werden. In dieser Ausführung erfolgt die Suche, wie bereits dargelegt, mittels Vergleich der im Suchbefehl enthaltenen Sprachmuster und den abgespeicherten Sprachsignalen. Die gefundenen Notizen werden zusammen mit den anderen gespeicherten Daten wiedergegeben. Textdaten oder Bilder werden z.B. auf einem Bildschirm ausgegeben; auch Melodien, Musik, Links können zum Beispiel auf Web-Seiten und E-mails ausgegeben werden.

Ein weiteres Beispiel ist die Aufzeichnung von Telefonaten oder Teilen davon, mit oder ohne zusätzlichen Kommentaren und den Telefonnummern. Gesucht werden kann nach Stichworten, zusammen mit Telfonnummern, und mittels der oben beschriebenen Assoziativ-Funktion nach Sprachmustern des Gesprächspartners, z.B. nach dem Sprachmuster seiner Namensnennung beim Melden am Gesprächsanfang.

Bei allen Suchvorgängen können natürlich auch zeitliche Einschränkungen bei der Suche (zwischen Datum und Datum, nach Tageszeit, nach Wochentag, Jahreszeit, usw.) zur Einschränkung des Suchraumes verwendet werden.

In einer Ausführung dieser Erfindung, bei der das Ein- und Ausgabegerät (Handy) mittels Sprach- oder Datenübertragungsvorrichtung an eine entfernte Speicher- und Rechenvorrichtung angeschlossen ist, ergeben sich die folgenden, zusätzlichen Funktionsabläufe: offline Eingeben, offline Suchen, getrennte Speicher mit unterschiedlichem Speicherumfang, Notwendigkeit von Verschlüsselung.

Offline Eingeben: zur Aufzeichnung neuer Sprachnotizen ist es nicht notwendig, dass eine Kommunikationsverbindung zu dem entfernten Gerät besteht. Die Informationen werden z.B. auf einer Flash-Speicherkarte komprimiert oder unkomprimiert zwischengespeichert. Es können mehrer Notizen gesammelt und zusammen übertragen werden. Die Übertragung kann zu Zeiten erfolgen, in denen günstigere Verbindungstarife gelten oder der Benutzer ohnehin in der Nähe des zweiten Gerätes ist, z.B. Überspielung im Büro auf Arbeits-PC.

Offline Suchen: wenn der Suchvorgang auf dem entfernten Gerät erfolgen soll, muss keine ständige Verbindung zwischen den beiden Geräten bestehen. Es genügt, wenn der Suchbefehl mit den Sprachmustern, z.B. per IP-Paket, an das entfernte Gerät übertragen wird und das Ergebnis ebenfalls per IP-Paket oder Rückruf übermittelt wird.

Ebenso ist es erfindungsgemäß möglich, Sprachaufzeichnungen auf verschiedenen Geräten gleichzeitig zu speichern. Der Benutzer wird typischerweise ein Ein- und Ausgabegerät in Form eines Handy mit sich führen. Dort können in einer Flash-Speicherkarte, nach heutigem Stand der Speichertechnik und der Kompressionsalgorithmen, Sprachaufzeichnungen bis zu einer Gesamtzeit von einigen Stunden gespeichert werden. Dieser Speicher kann z.B. die letzten Aufzeichnungen (offline Eingeben) und die aktuell sowie die häufig benötigten Notizen beinhalten. Die Aufzeichnungen im Handy werden periodisch, siehe `offline Eingeben', auf das entfernte Gerät übertragen. Das Suchen kann auf dem lokalen Gerät in den lokalen Aufzeichnungen oder auf dem entfernten Gerät erfolgen.

Das entfernte Gerät kann ein großer, von einem Provider, ähnlich wie bei Sprachboxdiensten, bereitgestellter Server sein. In dieser Ausführung ist eine verschlüsselte Übertragung und eine verschlüsselte Speicherung auf dem Server des Providers besonders wichtig. Verfahren zur Verschlüsselung von Sprache und Daten sind bekannt. Die Daten sollten zu keinem Zeitpunkt unverschlüsselt auf dem Server oder auf der Übertragungsstrecke vorliegen. Die Suche erfolgt ausschließlich im Handy anhand der Index-Listen oder mittels Durchsuchen der Stichworte und Zeiger von vorherigen, gespeicherten Suchbefehlen. Der Server dient nur zum Abspeichern der Notizen.

In einer weiteren Ausführung kann die Index-Liste oder die Aufzeichnung der früheren Suchbefehle teilweise auf dem Server liegen. Die Indexliste ist dazu hierarchisch gegliedert, die Liste der früheren Suchbefehle ist zeitlich untergliedert. Listen mit älteren Suchbefehlen liegen auf dem Server. Zum Durchsuchen werden die Listen bei Bedarf in das Handy übertragen.

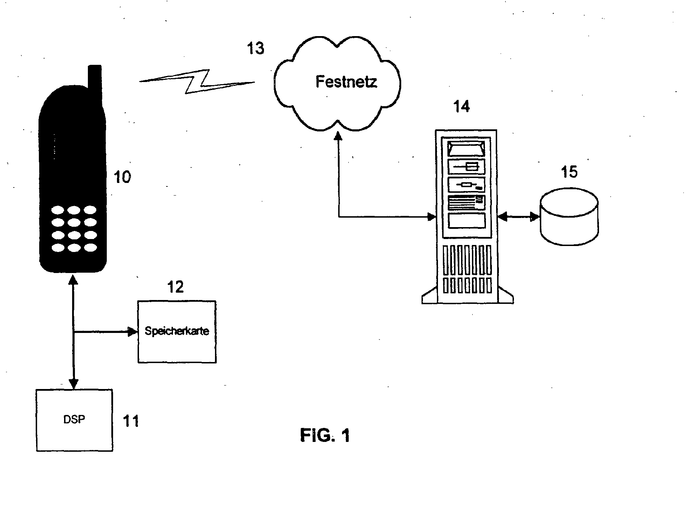

Nachfolgend wird die Erfindung in einem Ausführungsbeispiel näher erläutert. Die einzige Fig. zeigt die schematische Darstellung einer möglichen Kommunikationskonfiguration.

In der folgenden Beschreibung werden die Befehle des Benutzers durch Betätigung von Tasten ausgelöst. Dies können auch Soft-Tasten sein. Es ist auch erfindungsgemäß möglich, die Befehle durch Sprachkommandos zu geben.

Aufzeichnen: Der Benutzer betätigt die RECORD-Taste eines Handys 10 und spricht seine Notiz in das Handy 10. Am Ende drückt er die STOP-Taste. Die Eingabe der Sprache erfolgt über ein Mikrofon des Handys 10. Die analogen Sprachsignale werden in einem Analog-Digital-Wandler digitalisiert und in einen DSP 11 geleitet. Dort werden die Signale durch einen Vorfilter (Hoch- und Tiefpass) geführt, anschließend in Segmente unterteilt (typischerweise 10 bis 20 ms Segmente). Je nach verwendetem Kompressionsstandard überlappen sich die Segmente (z.B. um 10ms). Die Signalwerte in den Segmenten werden durch eine Hamming-Window-Funktion gewichtet. Danach erfolgt die Berechnung der Autokorrelationsfunktion der Signalwerte in den einzelnen Segmenten. Daraus werden die LPC-Koeffizienten berechnet. Zum Zwecke der Kompression und der Abspeicherung werden diese Koeffizienten und die Sprachsignale entsprechend den Vorgaben des verwendeten Kompressions-Standards weiter verarbeitet. Zum Zwecke des Mustervergleichs werden die LPC-Koeffizienten, oder transformierte Darstellungen (z.B. Cepstrum-Koeffizienten, PARCOR-Koeffizienten) als Bestandteil der komprimierten Sprachinformation in einer Speicherkarte 12 abgespeichert. Zusätzlich wird eine Datum- und Zeitmarke abgespeichert.

An Stelle der Verwendung des LPC-Verfahrens können auch andere Verfahren zur Sprachkompression und Mustererkennung eingesetzt werden, welche z.B. auf der Kurzzeit-Fourier-Analyse oder Filterbänken beruhen.

Die Aufzeichnung kann auch mittels einer Sprach-/Datenübertragung 13 auf einem entfernten Gerät, hier einem Rechner 14 oder einem Server 15, erfolgen.

Suchen: Der Benutzer drückt die SEARCH-Taste des Handys 10 und spricht während er die Taste gedrückt hält die zu suchenden Stichworte. Das Gerät 10 sucht nach entsprechenden Notizen und gibt die erste, gefundene Sprachinformation akustisch wieder. Der Benutzer kann dann zum Weitersuchen bzw. zur Ausgabe der nächsten gefundenen Notizen die NEXT-Taste drücken, oder eine Taste zur Bewertung (GUT, FALSCH) drücken und anschließend bei Bedarf die NEXT-Taste. Die Verarbeitung der Sprachsignale erfolgt analog der beim 'Aufzeichnen' beschriebenen. Die Sprachmuster werden ebenso abgespeichert. Anschließend werden die LPC-Parameter oder transformierte Darstellungen, z.B Ceptrum-Koeffizienten, der Mustererkennung zugeführt. Zur Mustererkennung werden die Parameter zu Vektoren zusammengefasst. Die einzelnen Stichworte werden zu Gruppen von Vektoren zusammengefasst. Anschließend werden sie mit den abgespeicherten Sprachinformationen verglichen. Die Anpassung an die unterschiedliche Sprechgeschwindigkeit der Muster erfolgt mit dem als `Dynamische Programmierung' bekannten Verfahren. Für jedes Stichwort werden in jeder Notiz der Abstandswert (Score) zu dem ähnlichsten abgespeicherten Muster ermittelt. Je nach Einstellung des Gerätes wird die erste gefundene Notiz, welche Muster enthält, deren Abstandswerte unter einem vorgegebenen Schwellenwert liegen, ausgegeben und weitergesucht. In einer anderen Einstellung werden zuerst alle Aufzeichnungen durchsucht, die Notizen nach ihren Abstandswerten sortiert und die mit den kleinsten Abstandswerten zuerst ausgegeben. Bei jedem Betätigen der NEXT-Taste wird die Notiz mit der nächst niedrigeren Wertung wiedergegeben. Vor dem Wiedergeben einer Notiz wird der Zeiger auf diese Notiz zur Aufzeichnung des Suchbefehls hinzugefügt. Ebenso werden Wertungen, welche der Benutzer nach Anhörung der Notiz eingibt, zur Aufzeichnung des Zeigers hinzugefügt.

### Unterschiede zu Spracherkennungssystemen

Spracherkennungssysteme sind für andere Aufgaben konstruiert. Ihr Zweck besteht darin, eine diktierte Eingabe möglichst fehlerfrei in Schriftform zu konvertieren. In Spracherkennungssystemen erfolgt eine Abbildung von gesprochener Sprache auf eine vorgegebene, im allgemeinen erweiterbare Menge von Worten oder Funktionen. Entsprechend ist der Aufbau der Algorithmen. Die Abbildung erfolgt in mehreren Schritten. Insbesondere die letzten Schritte unterschieden sich von der Vorgehensweise gemäß dieser Erfindung. Sie verwenden statistische Modelle (meistens Hidden-Markov-Modelle) mit Angaben über die Häufigkeiten von Übergängen zwischen Sprachsegmenten (Sprachlaute oder Phoneme). Diese werden teilweise durch eine für den Benutzer lästige Trainingsphase vor der Erstbenutzung erstellt. Bei dem erfindungsgemäßen Verfahren entfällt die Trainingsphase vor der Erstbenutzung. Auch ist der Wortschatz (Stichworte) nicht a priori festgelegt, sondern ergibt sich dynamisch und automatisch beim Aufzeichnen und Suchen. Ein weiterer Unterschied: beim Spracherkennungssystem gibt es zu jedem gesprochenen Wort eine `richtige' Abbildung, nämlich die, welche der Benutzer beabsichtigt hat. Im erfindungsgemäßen Gerät kann ein Stichwort mehrere richtige `Treffer' haben.

### Bezugszeichenliste

- 10: Handy
- 11: Digital Signal Prozessor DSP
- 12: Speicherkarte
- 13: Sprach-/Datenübertragung
- 14: Rechner
- 15: Server

## Patentansprüche

1. Verfahren zur Behandlung von Sprachinformationen zur Realisierung eines auf Sprache basierenden Gedächtnisses wie Abspeicherung und/oder Wiedergabe und/oder Übertragung, welches Mittel zur Eingabe und/oder Abspeicherung und/oder akustischen Wiedergabe und/oder zur Übertragung von Sprach-und Dateninformationen zu anderen Vorrichtungen zur dortigen Abspeicherung und/oder Wiedergabe verwendet sowie Mittel zum Suchen nach einem oder mehreren Sprachsegmenten in den abgespeicherten Sprachinformationen benutzt,
**dadurch gekennzeichnet, dass** gesprochene Worte und/oder zusammenhängende Sätze (Notizen) als Sprachsignale in einem Speicher digital aufgezeichnet werden, wobei Mittel zur Transformation der Sprachsignale in eine Darstellung im Frequenzbereich und/oder in eine komprimierte Darstellung im Zeitbereich vorgesehen werden,
- die in einem Teilumfang von mindestens einem Wort zum Suchen erneut gesprochen und in einer Vorrichtung mit den Aufzeichnungen verglichen und bewertet werden,
- woraus ein Abstandswert zwischen den beiden Sprachmustern auf der Basis ihrer Parameter im Zeit- und/oder Frequenzbereich ermittelt
- und die Notiz mit dem geringsten Abstandswert akustisch ausgegeben wird.

2. Verfahren nach Anspruch 1,
**dadurch gekennzeichnet, dass**
die Sprachsignale komprimiert aufgezeichnet werden.

3. Verfahren nach den Ansprüchen 1 und 2,
**dadurch gekennzeichnet, dass**
neben der komprimierten Sprachinformation auch unkomprimierte Signale gespeichert werden.

4. Verfahren nach Anspruch 1,
**dadurch gekennzeichnet, dass**
weitere Sprachsignale wie Sprachmuster der in den Suchbefehlen enthaltenen Stichworte, wie Zeiger auf die gefundenen Sprachnotizen, wie berechnete Abstandswerte und wie die Reaktion des Benutzers gespeichert werden.

5. Verfahren nach Anspruch 1,
**dadurch gekennzeichnet, dass**
die Notizen zuerst wiedergegeben werden, welche die höchste Anzahl der gesuchten Stichworte enthalten.

6. Verfahren nach den Ansprüchen 1 bis 5,
**dadurch gekennzeichnet, dass** die Sprachmuster beim Suchen mit den gleichen Datensätzen verglichen, welche auch zur Wiedergabe verwendet werden.

7. Verfahren nach den Ansprüchen 1 bis 6,
**dadurch gekennzeichnet, dass**
die Reaktionen des Benutzers auf die Ergebnisse eines Suchvorganges wie GUT, FALSCH, WEITER und/oder GANZ FALSCH, SEHR GUT aufgezeichnet werden.

8. Verfahren nach den Ansprüchen 1 bis 7,
**dadurch gekennzeichnet, dass**
bei späteren Suchvorgängen die Sprachmuster der früheren Suchbefehle unter Berücksichtigung der aufgezeichneten Wertungen und Zeiger durchsucht werden.

9. Verfahren nach den Ansprüchen 1 bis 8,
**dadurch gekennzeichnet, dass** während der Wiedergabe einer Fundstelle verdeckt weitergesucht wird.

10. Verfahren nach den Ansprüchen 1 bis 9,
**dadurch gekennzeichnet, dass** die Suchalgorithmen und - parameter auf der Grundlage der aufgezeichneten Muster und Wertungen optimiert werden.

11. Verfahren nach den Ansprüchen 1 bis 10,
**dadurch gekennzeichnet, dass**
verschlüsselt gespeichert und ein Zugangsschutz installiert werden.

12. Verfahren nach den Ansprüchen 1 bis 11,
**dadurch gekennzeichnet, dass**
die Spracheingabe über Mikrofon, Telefon oder offline über Diktiergerät, Sprachbox erfolgt.

13. Verfahren nach den Ansprüchen 1 bis 11,
**dadurch gekennzeichnet, dass**
die Wiedergabe über Kopfhörer, Telefon erfolgt.

14. Verfahren nach den Ansprüchen 1 bis 13,
**dadurch gekennzeichnet, dass**
eine Kurzzeitspeicherung in einem Handy, eine Langzeitspeicherung auf einem Server vorgenommen werden, wobei periodisch und/oder bei Zugriff in den Langzeitspeicher überspielt wird oder Sprachaufzeichnungen auf verschiedenen Geräten gleichzeitig vorgenommen werden.

15. Verfahren nach den Ansprüchen 1 bis 14,
**dadurch gekennzeichnet, dass**
ein Index aufgebaut wird, indem einzelne Sprachmuster gesondert abgelegt und mit Zeigern auf die aufgezeichneten Notizen versehen werden und Übereinstimmungskoeffizienten (Scores) gespeichert werden.

16. Verfahren nach den Ansprüchen 1 bis 15,
**dadurch gekennzeichnet, dass**
die Indexmuster durch den Benutzer durch das Sprechen einzelner Worte festgelegt wird.

17. Verfahren nach den Ansprüchen 15 und 16,
**dadurch gekennzeichnet, dass**
der Index offline erstellt wird.

18. Verfahren nach den Ansprüchen 15 bis 17,
**dadurch gekennzeichnet, dass**
die Offline-Optimierung und Indexerzeugung vorgenommen werden, wenn das Handy an die Stromversorgung (Netz) angeschlossen ist.

19. Verfahren nach den Ansprüchen 15 bis 17,
**dadurch gekennzeichnet, dass**
die Offline-Optimierung auf einem speziellen, leistungsfähigen Rechner vorgenommen wird.

20. Verfahren nach den Ansprüchen 1 bis 14,
**dadurch gekennzeichnet, dass**
das Suchen mit einer Zeitangabe erfolgt.

21. Verfahren nach den Ansprüchen 1 bis 19,
**dadurch gekennzeichnet, dass**
andere Dokumente wie Bilder mit Link auf den Kontext aufgezeichnet werden.

22. Vorrichtung zur Durchführung des Verfahrens nach den Ansprüchen 1 bis 21,
**dadurch gekennzeichnet, dass**
ein Telekommunikationsendgerät wie ein Handy/Telefon (10) mit einer Speicherkarte (12) wie FlashROM und/oder eine Datenverarbeitungseinrichtung wie PC, Server mit einer speziellen Zusatzsoftware (11) ausgestattet verwendet werden.

23. Vorrichtung zur Durchführung des Verfahrens nach Anspruch 22,
**dadurch gekennzeichnet, dass**
eine spezielle Software auf einem Rechner (14) wie PC mit Spracheingabe und Sprachausgabe verwendet wird.

24. Vorrichtung zur Durchführung des Verfahrens nach Anspruch 22,
**dadurch gekennzeichnet, dass**
ein Telefon über ein Netz an einen Rechner wie PC oder an einen speziellen Server angeschlossen verwendet wird.
